# EUROPÄISCHE PATENTANMELDUNG

(11) **EP 3 587 312 A1**
(43) Veröffentlichungstag der Anmeldung: **01.01.2020**
(21) Anmeldenummer: 18179310.0
(22) Anmeldetag: 22.06.2018
(51) Int. Cl.: B65G 54/02

(54) **TRANSPORTANORDNUNG FÜR EINEN LANGSTATORLINEARMOTOR**

(71) Anmelder: B&R Industrial Automation GmbH, 5142 Eggelsberg (AT)
(72) Erfinder: Kastinger, Christian, 5113 Georgen b. Sbg. (AT); Rogner, Philipp, 4452 Ternberg (AT)
(74) Vertreter: Patentanwälte Pinter & Weiss OG

(57) **Zusammenfassung**

Um eine flexible Transportanordnung (2) für einen Langstatorlinearmotor (1) anzugeben, die flexibler für den Transport von Produkten einsetzbar ist, umfasst die Transportanordnung (2) erfindungsgemäß eine Transporteinheit (20) und einen Produktträger (21), wobei die Transporteinheit (20) und der Produktträger (21) jeweils zumindest ein in der Bewegungsrichtung (x) angeordnetes Führungselement (201, 211) aufweisen, wobei die Transporteinheit (20) in einer Bewegungsrichtung (x) angeordnete Antriebsmagnete (M1, M2) zum Antreiben der Transporteinheit (20) aufweist und wobei der Produktträger (21) antriebslos ist und über einen Koppelpunkt (K) mit der Transporteinheit (20) koppelbar ist und von der Transporteinheit (20) über den Koppelpunkt (K) antreibbar ist.

## Beschreibung

Die gegenständliche Erfindung betrifft eine Transportanordnung für einen Langstatorlinearmotor und einen Langstatorlinearmotor umfassend zumindest eine Transportanordnung.

Ein Stator eines Langstatorlinearmotors (LLM) umfasst eine Vielzahl von nebeneinander angeordneten elektrischen Antriebsspulen, die ortsfest entlang einer Transportstrecke angeordnet sind. Auf einer am Stator beweglichen Transporteinheit ist eine Anzahl von Antriebsmagneten als Permanentmagnete oder als elektrische Spule bzw. als Kurzschlusswicklung angeordnet. Die Antriebsmagneten sind üblicherweise derart in Bewegungsrichtung auf der Transporteinheit angebracht, dass sie mit den Antriebsspulen des Stators zusammenwirken können. Der Langstatorlinearmotor kann als Synchronmaschine, sowohl selbsterregt oder fremderregt, oder als Asynchronmaschine ausgeführt sein. Durch das Zusammenwirken der (elektro)magnetischen Felder der Magnete und der Antriebsspulen wirkt eine Vortriebskraft auf die Magnete der Transporteinheit, womit wiederum die Transporteinheit in Bewegungsrichtung bewegt wird. Dies erfolgt durch Ansteuerung der einzelnen Antriebsspulen zur Regelung des magnetischen Flusses, durch welchen die Größe der Vortriebskraft beeinflusst wird. Es werden vermehrt Langstatorlinearmotoren als Ersatz für konventionelle Stetigförderer bzw. rotativ-zu-linear Übersetzungseinheiten (z.B. rotativer Motor an Förderband, Riemen, Ketten etc.) eingesetzt, um den Anforderungen moderner, flexibler Logistikeinheiten gerecht zu werden.

In der Regel werden Langstatorlinearmotoren meist in einer Ebene angeordnet, sodass die Transporteinheiten entlang einer ebenen Transportstrecke bewegt werden. Die Transportstrecke kann dabei aus Transportsegmenten in Form von Kurvensegmenten, Geraden oder auch Weichen zusammengesetzt sein. Eine Transporteinheit muss natürlich auf geeignete Weise entlang der Transportstrecke geführt und an dieser gehalten werden. Dazu sind an der Transporteinheit Führungselemente vorgesehen, die mit an der Transportstrecke vorgesehenen Strecken-Führungselementen zusammenwirken. Hierbei können an sich beliebige Führungselemente und Strecken-Führungselemente, wie beispielsweise Rollen, Räder, Gleitelemente, Führungsflächen, usw., zum Einsatz kommen.

Mithilfe von Langstatorlinearmotoren können effiziente Transportsysteme für Lasten, bzw. Produkte realisiert werden. Die Lasten bzw. Produkte werden normalerweise an einer oder mehreren Transporteinheiten befestigt und an diesen mitbewegt. Die US 2017/0341875 A1, US 8,096,409 B2, US 7,134,258 B2, EP 2 704 968 B1 zeigen derartige Vorrichtungen, bei denen Produkte durch Transporteinheiten entlang einer Transportstrecke bewegt werden. Produkte mit speziellen Abmessungen können jedoch mit gängigen Transporteinheiten nicht ideal bewegt werden. Ebenso können schwere Produkte aufgrund einer vorgegebenen maximalen Beladung einer Transporteinheit ggf. nicht transportiert werden.

Es ist somit eine Aufgabe der gegenständlichen Erfindung Langstatorlinearmotoren und Transportanordnungen für Langstatorlinearmotoren anzugeben, die flexibler für den Transport von Produkten einsetzbar sind.

Diese Aufgabe wird erfindungsgemäß gelöst, indem eine Transportanordnung für einen Langstatorlinearmotor eine Transporteinheit und einen Produktträger umfasst, wobei die Transporteinheit und der Produktträger jeweils zumindest ein in der Bewegungsrichtung angeordnetes Führungselement aufweisen, wobei die Transporteinheit in einer Bewegungsrichtung angeordnete Antriebsmagnete zum Antreiben der Transporteinheit aufweist und wobei der Produktträger antriebslos ist und über einen Koppelpunkt mit der Transporteinheit koppelbar ist und von der Transporteinheit über den Koppelpunkt antreibbar ist. Der Produktträger ist grundlegend separat von der Transporteinheit ausgeführt und ist antriebslos, d.h. unaktuiert. Der Produktträger kann jedoch von der Transporteinheit über den Koppelpunkt angetrieben werden. Somit kann die Transportordnung auch eine übliche Transporteinheit und einen speziellen Produktträger, der die Anforderungen zum Produkttransport erfüllt, umfassen. Die Führungselemente des Produktträgers können hinsichtlich der Transporteinheit zahlreicher und/oder robuster ausgeführt sein, was es ermöglicht höhere Lasten über den Produktträger zu bewegen. Koppelbar bedeutet, dass der Produktträger über den Koppelpunkt mit der Transporteinheit fest oder lösbar gekoppelt ist oder gekoppelt werden kann. Damit ist der Produktträger durch die Transporteinheit antreibbar ist. der Produktträger wird durch die Transporteinheit angetrieben, wenn er mit der Transporteinheit gekoppelt ist.

Die Transportanordnung kann zumindest einen weiteren Produktträger umfassen, der zumindest ein in der Bewegungsrichtung angeordnetes Führungselement aufweist, wobei der zumindest eine weitere Produktträger über zumindest einen weiteren Koppelpunkt mit der Transporteinheit oder dem Produktträger koppelbar ist und von der Transporteinheit oder dem Produktträger über den zumindest einen weiteren Koppelpunkt antreibbar ist. Der weitere Produktträger kann somit über den zumindest einen weiteren Koppelpunkt mit dem ersten Produktträger oder der Transporteinheit gekoppelt werden. So ist es möglich weitere Produktträger in die Transportanordnung aufzunehmen, wobei die Vortriebskraft von der Transporteinheit über die jeweiligen Koppelpunkte an die Produktträger übertragen wird. Die weiteren Koppelpunkte müssen natürlich nicht zwingend identisch ausgeführt sein, wie der erste Koppelpunkt, auch wenn dies natürlich die Kompatibilität zwischen Produktträgern und Transporteinheiten und damit auch die Kombinationsmöglichkeiten ebendieser steigert.

Die Transportanordnung kann auch zumindest eine weitere Transporteinheit umfassen, die zumindest ein in der Bewegungsrichtung angeordnetes Führungselement aufweist, wobei die zumindest eine weitere Transporteinheit in einer Bewegungsrichtung angeordnete weitere Antriebsmagnete zum Antreiben der weiteren Transporteinheit aufweist und wobei der Produktträger über einen weiteren Koppelpunkt mit der weiteren Transporteinheit koppelbar ist und von der Transporteinheit über den Koppelpunkt antreibbar ist. Damit kann eine weitere Transporteinheit in die Transportanordnung aufgenommen werden, womit sowohl von der ersten Transporteinheit, als auch von der zweiten Transporteinheit jeweils eine Vortriebskraft über die jeweiligen Koppelpunkte an den Produktträger übertragen wird. Dies ist bei besonders schweren Produktträgern, oder bei Produktträgern, die dazu ausgelegt sind besonders schwere Produkte zu bewegen, vorteilhaft.

Die Transportanordnung kann vorteilhafterweise zumindest einen weiteren Produktträger umfassen, der zumindest ein in der Bewegungsrichtung angeordnetes Führungselement aufweist, wobei der zumindest eine weitere Produktträger über zumindest einen weiteren Koppelpunkt mit der Transporteinheit oder dem Produktträger koppelbar ist und von der Transporteinheit oder dem Produktträger über den zumindest einen weiteren Koppelpunkt antreibbar ist und zumindest eine weitere Transporteinheit umfassen, die zumindest ein in der Bewegungsrichtung angeordnetes Führungselement aufweist, wobei die zumindest eine weitere Transporteinheit in einer Bewegungsrichtung angeordnete weitere Antriebsmagnete zum Antreiben der weiteren Transporteinheit aufweist und wobei der Produktträger oder der zumindest eine weitere Produktträger über einen zweiten weiteren Koppelpunkt mit der weiteren Transporteinheit koppelbar ist, und von der weiteren Transporteinheit über den zweiten weiteren Koppelpunkt antreibbar ist. Die Transportanordnung kann also eine beliebige Aneinanderreihung von Transporteinheiten und Produktträgern umfassen, wobei die jeweils aneinandergereihten Transporteinheiten und Produktträgern jeweils über Koppelpunkte koppelbar sind. Die Transportanordnung muss dabei aber zumindest eine Transporteinheit und zumindest einen Produktträger umfassen, wobei der zumindest eine Produktträger unaktuiert ist und von der zumindest einen Transporteinheit in Bewegungsrichtung gezogen oder geschoben wird.

Koppelbar kann für alle Ausgestaltungen bedeuten, dass die Transporteinheiten und Produktträger lediglich aneinander anliegen. Koppelbar kann aber auch bedeuten, dass Produktträger bzw. Transporteinheit auch fest oder lösbar miteinander gekoppelt sind, beispielsweise anhand einer am Koppelpunkt vorgesehenen Deichsel. Es kann am Koppelpunkt eine Kopplung über einen Einrastmechanismus, welcher über einen Lösemechanismus lösbar sein kann, stattfinden. Die Kopplung kann beispielweise eine Magnetkopplung, beispielsweise durch Permanentmagnete, umfassen, etc.

Der Produktträger bzw. der weitere Produktträger kann in Bewegungsrichtung knickbar ausgeführt sein. Dies ist insbesondere bei langen Produktträgern vorteilhaft, da somit auch eine Verwendung von Transportstrecken mit geringeren Kurvenradien ermöglicht werden.

Der Produktträger bzw. der weitere Produktträger kann Eingriffselemente umfassen, die mit einem Produkt oder einer Last in Eingriff gebracht werden können, um das jeweilige Produkt, bzw. die jeweilige Last besser zu transportieren. Natürlich kann auch die Transporteinheit selbst Eingriffselemente aufweisen.

Ein Langstatorlinearmotor mit einer in Bewegungsrichtung ausgerichteten Transportstrecke kann eine erfindungsgemäße Transportanordnung umfassen und zudem Strecken-Führungselemente, die mit dem Führungselementen zusammenwirken um die zumindest eine Transportanordnung entlang der Transportstrecke zu führen und mit einer Anzahl entlang der Transportstrecke nebeneinander angeordneten Antriebsspulen, die ausgestaltet sind mit den Antriebsmagneten zusammenzuwirken um die zumindest eine Transportanordnung entlang der Transportstrecke anzutreiben. Um einen Produktträger durch eine Transporteinheit entlang der Transportstrecke anzutreiben, ist der Produktträger auf der Transportstrecke über den Koppelpunkt mit der Transporteinheit gekoppelt.

Dabei kann der Langstatorlinearmotor ein erstes Strecken-Führungselement aufweisen, das mit zumindest einem Führungselement der Transporteinheit und mit zumindest einem Führungselement des Produktträgers zusammenwirkt.

Der Langstatorlinearmotor kann auch zusätzlich ein zweites Strecken-Führungselement aufweisen, das mit einem zweiten Führungselement des Produktträgers zusammenwirkt. Damit können noch höhere Lasten, z.B. noch schwerere Produkte, transportiert zu können.

Der Langstatorlinearmotor kann ein erstes Strecken-Führungselement aufweisen, das mit einem Führungselement der Transporteinheit und ein zweites Strecken-Führungselement aufweisen, das mit einem Führungselement des Produktträgers zusammenwirkt. Das erste Führungselement kann beispielsweise für geringere Lasten und das zweite Führungselement für größere Lasten dimensioniert sein. Dies ist vorteilhaft, da der Produktträger dazu dient, die Lasten selbst zu transportieren und die Transporteinrichtung in erster Linie der Bereitstellung der Vortriebskraft dient.

Die gegenständliche Erfindung wird nachfolgend unter Bezugnahme auf die Figuren 1 bis 3d näher erläutert, die beispielhaft, schematisch und nicht einschränkend vorteilhafte Ausgestaltungen der Erfindung zeigen. Dabei zeigt
Fig.1 einen Langstatorlinearmotor mit einem Strecken-Führungselement für die Führungselemente des Produktträgers und der Transporteinheit,
Fig.2a eine Transportstrecke mit einem zusätzlichen zweiten Strecken-Führungselement für zumindest ein zweites Führungselement des Produktträgers,
Fig.2b eine Transportstrecke mit einem ersten Strecken-Führungselement für die Führungselemente der Transporteinheit und mit einem zweiten Strecken-Führungselement für die Führungselemente des Produktträgers
Fig.3a eine Transportanordnung mit einer Transporteinheit und einem Produktträger,
Fig.3b eine Transportanordnung mit einer Transporteinheit und zwei Produktträgern,
Fig.3c eine Transportanordnung mit zwei Transporteinheiten und einem Produktträger,
Fig.3d eine Transportanordnung mit zwei Transporteinheiten und zwei Produktträgern.

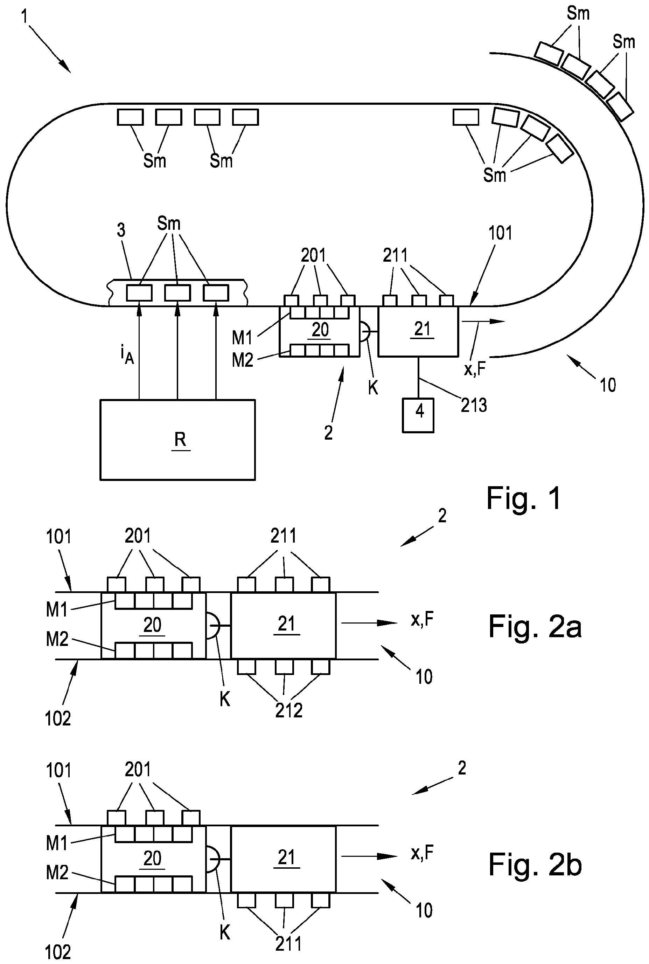

Fig.1 stellt ein einfaches Beispiel eines Langstatorlinearmotors 1 dar. Der Langstatorlinearmotor 1 ist dabei als Transportstrecke 10 ausgeführt, die hier geschlossen ausgeführt ist. Auf der Transportstrecke 10 sind eine Vielzahl von Antriebsspulen Sm angeordnet, die unter Kontrolle einer Regelungseinheit R (nur für einige Antriebsspulen Sm dargestellt) mit einem Spulenstrom **i**_{A} (als Vektor in Betrag und Richtung) bestromt werden, um ein bewegtes Magnetfeld zu erzeugen. Die in Bewegungsrichtung x nebeneinander angeordneten Antriebsspulen Sm sind an einer ortsfesten Haltekonstruktion 3 (in Fig.1 nur angedeutet) an der Transportstrecke 10 angeordnet. Es ist beispielhaft eine erfindungsgemäße Transportanordnung 2 dargestellt, wobei natürlich üblicherweise mehrere Transportanordnungen 2 an einem Langstatorlinearmotor 1 vorgesehen sind. Die Transportanordnungen 2 werden entlang der Transportstrecke 10 in einer Bewegungsrichtung x bewegt, und sind dazu jeweils auf geeignete Weise an der stationär angeordneten Transportstrecke 10 über Strecken-Führungselemente 101 geführt. Selbstverständlich können entlang der Transportstrecke 10 auch mehr als eine Transportanordnung 2 bewegt werden, wobei jede Transportanordnung 2 durch entsprechendes Bestromen der Antriebsspulen Sm im Bereich der der Transportanordnung 2 zugehörigen Transporteinheit 20 unabhängig von den anderen Transporteinheiten 1 (in Richtung, Position, Geschwindigkeit und Beschleunigung) bewegt werden kann. Die Transportstrecke 10 kann dabei, je nach Anwendung und Bedarf, beliebig geformt sein und kann geschlossene und/oder offene Streckenabschnitte umfassen. Die Transportstrecke 10 muss nicht in einer Ebene liegen, sondern kann auch beliebig im Raum geführt sein. Das grundlegende Funktionsprinzip eines Langstatorlinearmotors 1 ist hinlänglich bekannt, sodass hier nicht weiter darauf eingegangen wird.

Eine Transportanordnung 2 umfasst eine Transporteinheit 20 und zumindest einen mit der Transporteinheit 20 an einem Koppelpunkt K koppelbaren Produktträger 21. Die Transporteinheit 20 weist Antriebsmagnete M1, M2 auf, die in der Bewegungsrichtung x seitlich angeordnet sind und zum Antreiben der Transporteinheit 20 dienen, indem durch Zusammenwirken mit den Antriebsspulen Sm eine Vortriebskraft F in Bewegungsrichtung x erzeugt wird. Die Transporteinheit 20 kann lediglich auf einer Seite Antriebsmagnete M1, M2 aufweisen. Es kann auch, wie in den Fig. 1-3d dargestellt vorgesehen, dass zusätzlich zur ersten Anzahl Magnete M1 eine zweite Anzahl Magnete M2, vorteilhafterweise gegenüber der ersten Anzahl Magnete M1, aufweisen, wobei die erste und zweite Anzahl vorteilhafterweise identisch ist. Weist die Transporteinheit 20 an zwei Seiten jeweils eine erste Anzahl Magnete M1, bzw. eine zweite Anzahl Magnete M2 auf, so können passend dazu an beiden Seiten der Transportstrecke 10 (in Bewegungsrichtung x gesehen) jeweils Antriebsspulen Sm vorgesehen sein, die mit den jeweiligen Magneten M1, M1 zusammenwirken um eine Bewegung der Transporteinheit 20 zu verursachen. Dazu werden vorzugsweise nur die Antriebsspulen Sm im Bereich der Magneten M1, M2 bestromt, wobei dieser Bereich auch Antriebspulen Sm umfassen kann, die sich vor und/oder nach der Transporteinheit 20 befinden.

Der Produktträger 21 weist keine Antriebsmagnete M1, M2 auf, ist jedoch über den Koppelpunkt K mit der Transporteinheit 20 koppelbar und somit durch die Transporteinheit 20 antreibbar. Der Produktträger 21 ist somit selbst ohne eigenen Antrieb und damit antriebslos, d.h., dass der Produktträger 21 alleine nicht entlang der Transportstrecke 10 bewegbar ist. Die Transporteinheit 20 hingegen hat einen eigenen Antrieb, der sich aus den zusammenwirkenden Antriebsmagneten M1, M2 und Antriebsspulen Sm ergibt, und ist daher mit diesem Antrieb entlang der Transportstrecke 10 bewegbar.

Die Transporteinheit 20 erfährt also über die Antriebsmagnete M1, M2 in Zusammenwirkung mit Antriebsspulen Sm im Bereich der Antriebsmagnete M1, M2 eine Vortriebskraft F in Bewegungsrichtung x und überträgt diese Vortriebskraft F über den Koppelpunkt K an den Produktträger 21. Dabei kann sich der Produktträger 21, wie in Fig.1 dargestellt in Bewegungsrichtung x vor, oder auch hinter der Transporteinheit 20 befinden. Befindet sich der Produktträger 21 in Bewegungsrichtung vor der Transporteinheit 20, so schiebt die Transporteinheit 20 den Produktträger 21 vor sich her und es kann der Koppelpunkt K durch ein Anliegen der Transporteinheit 20 am Produktträger 21 ausgebildet werden. Vorteilhafterweise stellt der Koppelpunkt K jedoch eine feste Kopplung dar, die auch lösbar ausgestaltet sein kann. So kann als Koppelpunkt K eine Deichsel vorgesehen sein, wie es auch in Fig.1-3d angedeutet ist. Eine derartige feste bzw. lösbare Kopplung ist insbesondere dann sinnvoll, wenn sich der Produktträger 21 in Bewegungsrichtung x hinter der Transporteinheit 20 befindet, um die Vortriebskraft von der Transporteinheit 20 auf den Produktträger 21 zu übertragen. Der Produktträger 21 weist hier Eingriffselemente 213 auf, die in Eingriff mit einem Produkt 4 gebracht werden können. Damit kann ein Produkt 4 in Bewegungsrichtung transportiert werden. Natürlich kann auch die Transporteinheit 20 Eingriffselemente aufweisen, primär sind jedoch die Produktträger 21 für den Transport von Lasten, bzw. Produkten 4 vorgesehen. Der Übersichtlichkeit halber wird auf eine Darstellung von Eingriffselementen 213 in den weiteren Figuren verzichtet.

Es ist an zumindest einer Seite der Transporteinheit 20 zumindest ein erstes Führungselement 201 angeordnet. Das zumindest eine erste Führungselement 201 kann sich, wie in Fig. 1 dargestellt, vorteilhafterweise auf derselben Seite wie die erste Anzahl Magnete M1 befinden, sich jedoch auch an einer anderen Seite der Transportanordnung 2 befinden. Das zumindest eine erste Führungselement 201 kann wie sich wie in Fig. 1 dargestellt seitlich an der Transporteinheit 20 angeordnet sein, kann sich natürlich auch vor und/oder hinter und/oder über und/oder unter die Ausdehnung der Transporteinheit 20 erstrecken. Üblicherweise sind mehrere erste Führungselemente 201 auf einer Seite vorgesehen, wie auch in Fig. 1 angedeutet.

Gleichermaßen ist an zumindest einer Seite des Produktträgers 21 zumindest ein erstes Führungselement 211 angeordnet, das sich ebenso wie in Fig. 1 dargestellt seitlich des Produktträgers 21 befinden kann. Ebenso ist auch eine Anordnung vor und/oder hinter und/oder über und/oder unter die Ausdehnung des Produktträgers 21 möglich, wobei üblicherweise auch mehrere erste Führungselemente 211 auf einer Seite vorgesehen sind, wie ebenso auch in Fig. 1 angedeutet.

In Fig. 1 befinden sich die Führungselemente 201 der Transporteinheit 20 und die Führungselemente 211 des Produktträgers 21 auf derselben Seite. Dementsprechend ist an der Transportstrecke 10 ein Strecken-Führungselement 101vorgesehen sein, das mit den Führungselementen 201 der Transporteinheit 20 und den Führungselementen 211 des Produktträgers zusammenwirkt, um die Transportanordnung 2 entlang der Transportstrecke 10 in Bewegungsrichtung x zu führen.

Fig. 2a stellt einen Ausschnitt einer Transportstrecke 10 eines Langstatorlinearmotors dar, der wie in Fig. 1 ein erstes Strecken-Führungselement 101 aufweist, das mit den ersten Führungselementen 201 der Transporteinheit 20 und mit zumindest einem ersten Führungselement 211 des Produktträgers 21 zusammenwirkt. Zusätzlich ist jedoch zumindest ein zweites Strecken-Führungselement 102 vorgesehen, das mit zumindest einem zweiten Führungselement 212 des Produktträgers 21 zusammenwirkt. Dadurch, dass der Produktträger 21 über zumindest ein erstes Führungselement 211 mit einem ersten Strecken-Führungselement 102 und zusätzlich über zumindest ein zweites Führungselement 202 mit einem zweiten Strecken-Führungselement 102 in Eingriff steht, können mit dem Produktträger 21 beispielsweise auch schwere Lasten transportiert werden, für die das erste Strecken-Führungselement 101 alleine nicht ausgelegt ist. Das zweite Strecken-Führungselement 102 ist hier nur beispielhaft gegenüber des ersten Strecken-Führungselements 101 vorgesehen, kann sich jedoch auf einer beliebigen, auch auf derselben Seite befinden. Analog ist das zumindest eine zweite Führungselement 212 des Produktträgers 21 nur beispielhaft gegenüber des zumindest einen ersten Führungselements 212 des Produktträgers 21 angeordnet.

In Fig. 2b ist ein Ausschnitt einer Transportstrecke 10 eines Langstatorlinearmotors dargestellt, der ein erstes Strecken-Führungselement 101 aufweist, das mit zumindest einem Führungselement 201 der Transporteinheit 20 zusammenwirkt. Zusätzlich ist ein zweites Strecken-Führungselement 102 vorgesehen, das mit zumindest einem Führungselement 211 des Produktträgers 21 zusammenwirkt. Auch hier ist das zweite Strecken-Führungselement 102 nur beispielhaft gegenüber des ersten Strecken-Führungselements 101 vorgesehen. Das erste Strecken-Führungselement 101 kann somit für die Anforderungen der Transporteinheit 20, d.h. auf die Anforderungen der aufzubringenden Vortriebskraft F ausgelegt werden. Das zweite Strecken-Führungselement 102 hingegen kann auf die Anforderungen des Produktträgers 21 ausgelegt werden, d.h. insbesondere für eine Führung von schweren Produkten 4, bzw. schweren Lasten.

Die Führungselemente 201, 202 der Transporteinheit 20, wie auch die Führungselemente 211, 212 des Produktträgers 21 können als Rollen, Räder, Gleitelemente, Führungsflächen, Gleitflächen, usw., ausgeführt sein, wobei die Strecken-Führungselemente 101, 102 natürlich derart gestaltet sein müssen, dass die jeweiligen Führungselemente 201, 202, 211, 212 darin geführt werden können. Die Antriebsspulen Sm werden vorzugsweise im Bereich der Strecken-Führungselemente 101, 102 beispielsweise ebenfalls an der Haltekonstruktion 3 angeordnet, um eine kompakte Ausführung zu erreichen. Es ist natürlich auch vorstellbar, dass die Antriebspulen Sm sich auf anderen Seiten befinden, als die Strecken-Führungselemente 101, 102 womit natürlich auch die Magnete M1, M2 an den Seiten der Antriebspulen Sm angebracht sein müssen.

Es ist entlang der Transportstrecke natürlich jede Kombination aus ersten und zweiten Strecken-Führungselementen 101, 102 vorstellbar, die jeweils bedarfsweise mit Führungselementen 201, 202, 211, 212 der vorhandenen Transporteinheiten 20 und Produktträger 21 zusammenwirken können. So kann die Transportstrecke 10 zumindest teilweise an zwei Seiten mit Strecken-Führungselementen 101, 102 ausgestattet sein, oder auch zumindest teilweise eine einseitige Führung vorgesehen sein - selbst wenn die Transporteinheit 20 oder der Produktträger 21 Führungselemente 201, 202, 211, 212 an zwei Seiten aufweist.

In den Fig. 1 und Fig.2a, 2b ist jeweils eine Transportanordnung 2 dargestellt, die sich aus einer Transporteinheit 20 und einem über einen Koppelpunkt K mit der Transporteinheit 20 gekoppelten Produktträger 21 zusammensetzt, wobei sich der Produktträger 21 in Bewegungsrichtung vor der Transporteinheit 20 befindet. Transporteinheit 20 und Produktträger 21 sind koppelbar, das bedeutet, dass sie fest oder lösbar gekoppelt sind oder gekoppelt werden können. In der dargestellten, und bevorzugten Ausführungsform sind Transporteinheit 20 und Produktträger 21 beispielhaft gekoppelt dargestellt.

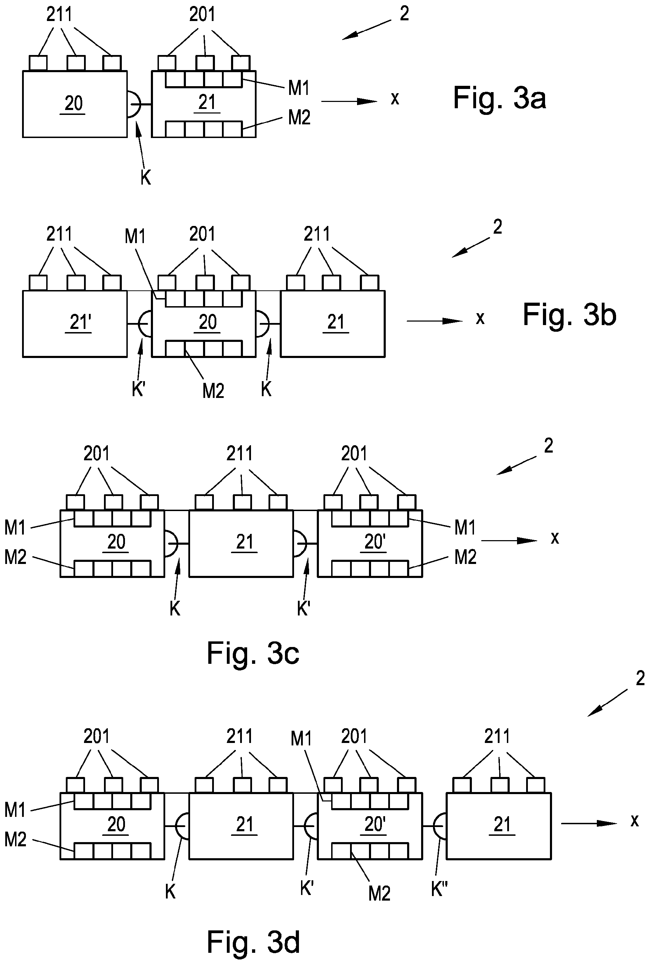

Die Transportanordnung 2 kann natürlich durch eine Transporteinheit 20 mit einer und einem über einen Koppelpunkt K mit der Transporteinheit 20 gekoppelten und in Bewegungsrichtung x hinter der Transporteinheit 20 befindlichen Produktträger 21 zusammensetzt, wie in Fig. 3a dargestellt.

In den Fig. 3a-3d sind weitere Transportanordnungen 2 dargestellt, wobei aus Übersichtlichkeitsgründen auf eine Darstellung eines Langstatorlinearmotors 2 oder einer Transportstrecke 10 verzichtet wird und beispielhaft lediglich auf einer Seite Führungseinheiten 211, 201 vorgesehen sein. Natürlich sind die Transportanordnungen 2, wie die oben beschriebenen gleichermaßen für Langstatorlinearmotoren 2 geeignet und können auch oben ausgeführte Anordnungen der Führungseinheiten 211, 201 vorgesehen sein.

Fig. 3b zeigt eine Transportanordnung 2, welche neben der Transporteinheit 20 und dem ersten Produktträger 21 einen weiteren Produktträger 21' aufweist. Der erste Produktträger 21 ist hier über einen ersten Koppelpunkt mit der Transporteinheit 20 gekoppelt und befindet sich in Bewegungsrichtung x vor der Transporteinheit 20. Der weitere Produktträger 21' ist über einen weiteren Koppelpunkt K' mit der Transporteinheit 20 gekoppelt, und befindet sich in Bewegungsrichtung x hinter der Transporteinheit 20. Damit überträgt die Transporteinheit 20 die Vortriebskraft F über den Koppelpunkt K auf den ersten Produktträger 21 und über den weiteren Koppelpunkt K' auf den weiteren Produktträger 21'. Der weitere Produktträger 21' könnte natürlich auch über den weiteren Koppelpunkt K' mit dem Produktträger 21 gekoppelt. In diesem Fall würde die Vortriebskraft F von der Transporteinheit 20 über den Koppelpunkt K auf den ersten Produktträger 21 und vom ersten Produktträger 21 über den weiteren Koppelpunkt K' auf den weiteren Produktträger 21' übertragen werden.

Fig. 3c zeigt eine weitere Ausgestaltung der Transportanordnung 2, wobei sich ein Produktträger 21 zwischen einer ersten Transporteinheit 20 und einer weiteren Transporteinheit 21' befindet und über einen ersten Koppelpunkt K mit der ersten Transporteinheit 21 und über einen weiteren Koppelpunkt K' mit der weiteren Transporteinheit 21' gekoppelt ist.

In Fig. 3d ist eine Transportanordnung bestehend aus einer Transporteinheit, einem Produktträger, einer weiteren Transporteinheit 20' und einem weiteren Produktträger 21' dargestellt, die jeweils über Koppelpunkte K, K', etc. miteinander gekoppelt. Es ist als Transportanordnung 20 somit eine beliebige Aneinanderreihung von koppelbaren, bzw. gekoppelten Transporteinheiten 20 und Produktträgern 21 in Bewegungsrichtung x vorstellbar.

## Patentansprüche

1. Transportanordnung (2) für einen Langstatorlinearmotor (1) umfassend eine Transporteinheit (20) und einen Produktträger (21), wobei die Transporteinheit (20) und der Produktträger (21) jeweils zumindest ein in der Bewegungsrichtung (x) angeordnetes Führungselement (201, 211) aufweisen, wobei die Transporteinheit (20) in einer Bewegungsrichtung (x) angeordnete Antriebsmagnete (M1, M2) zum Antreiben der Transporteinheit (20) aufweist und wobei der Produktträger (21) antriebslos ist und über einen Koppelpunkt (K) mit der Transporteinheit (20) koppelbar ist und von der Transporteinheit (20) über den Koppelpunkt (K) antreibbar ist.

2. Transportanordnung (2) nach Anspruch 1, **dadurch gekennzeichnet, dass** die Transportanordnung (2) zumindest einen weiteren Produktträger (21) umfasst, der zumindest ein in der Bewegungsrichtung (x) angeordnetes Führungselement (201, 211) aufweist, wobei der zumindest eine weitere Produktträger (21') antriebslos ist und über zumindest einen weiteren Koppelpunkt (K') mit der Transporteinheit (20) oder dem Produktträger (21) koppelbar ist und von der Transporteinheit (20) oder dem Produktträger (21) über den zumindest einen weiteren Koppelpunkt (K') antreibbar ist.

3. Transportanordnung (2) nach Anspruch 1, **dadurch gekennzeichnet, dass** Transportanordnung (2) zumindest eine weitere Transporteinheit (20') umfasst, die zumindest ein in der Bewegungsrichtung (x) angeordnetes Führungselement (201, 211) aufweist, wobei die zumindest eine weitere Transporteinheit (20') in einer Bewegungsrichtung (x) angeordnete weitere Antriebsmagnete (M1', M2') zum Antreiben der weiteren Transporteinheit (20') aufweist und wobei der Produktträger (21) über einen weiteren Koppelpunkt (K') mit der weiteren Transporteinheit (20') koppelbar ist und von der Transporteinheit (20) über den Koppelpunkt (K) antreibbar ist.

4. Transportanordnung (2) nach Anspruch 2, **dadurch gekennzeichnet, dass** Transportanordnung (2) zumindest eine weitere Transporteinheit (20') umfasst, die zumindest ein in der Bewegungsrichtung (x) angeordnetes Führungselement (201, 211) aufweist, wobei die zumindest eine weitere Transporteinheit (20') in einer Bewegungsrichtung (x) angeordnete weitere Antriebsmagnete (M1', M2') zum Antreiben der weiteren Transporteinheit (20') aufweist und wobei der Produktträger (21) oder der zumindest eine weitere Produktträger (21') über einen zweiten weiteren Koppelpunkt (K") mit der weiteren Transporteinheit (20') koppelbar ist und von der weiteren Transporteinheit (20') über den zweiten weiteren Koppelpunkt (K) antreibbar ist.

5. Transportanordnung (2) nach einem der Ansprüche 1 bis 4, **dadurch gekennzeichnet, dass** der Produktträger (21) bzw. der weitere Produktträger (21') in Bewegungsrichtung (x) knickbar ausgeführt ist.

6. Transportanordnung (2) nach einem der Ansprüche 1 bis 5, **dadurch gekennzeichnet, dass** der Produktträger (21) bzw. der weitere Produktträger (21') Eingriffselemente (213) umfasst, die in Eingriff mit einem Produkt (4) gebracht werden können.

7. Langstatorlinearmotor (1) mit zumindest einer Transportanordnung (2) nach einem der Ansprüche 1 bis 6 und mit einer in Bewegungsrichtung (x) ausgerichteten Transportstrecke (10), aufweisend Strecken-Führungselemente (101, 102), die mit dem Führungselementen (201, 211) zusammenwirken um die zumindest eine Transportanordnung (2) entlang der Transportstrecke (10) zu führen und mit einer Anzahl entlang der Transportstrecke nebeneinander angeordneten Antriebsspulen (Sm), die ausgestaltet sind mit den Antriebsmagneten (Mn) zusammenzuwirken um die zumindest eine Transportanordnung (2) entlang der Transportstrecke (10) anzutreiben.

8. Langstatorlinearmotor (1) nach Anspruch 7, **dadurch gekennzeichnet, dass** ein erstes Strecken-Führungselement (101) mit einem Führungselement (201) der Transporteinheit (20) und mit zumindest einem Führungselement (211) des Produktträgers (21) zusammenwirkt.

9. Langstatorlinearmotor (1) nach Anspruch 8, **dadurch gekennzeichnet, dass** ein zweites Strecken-Führungselement (102) mit zumindest einem zweiten Führungselement (212) des Produktträgers (21) zusammenwirkt.

10. Langstatorlinearmotor (1) nach Anspruch 7, **dadurch gekennzeichnet, dass** erstes Strecken-Führungselement (101) mit zumindest einem Führungselement (201) der Transporteinheit (20) und ein zweites Strecken-Führungselement (102) mit zumindest einem Führungselement (211) des Produktträgers (21) zusammenwirkt.
